# EUROPEAN PATENT APPLICATION

(11) **EP 3 252 592 A1**
(43) Date of publication of application: **06.12.2017**
(21) Application number: 16836379.4
(22) Date of filing: 15.02.2016
(51) Int. Cl.: G06F 3/06

(54) **METHOD AND DEVICE FOR STORING AND READING DATA**

(30) Priority: 18.08.2015 CN 201510508092
(71) Applicant: Huawei Technologies Co., Ltd., Longgang District Shenzhen, Guangdong 518129 (CN)
(72) Inventor: BI, Jieshan, Shenzhen Guangdong 518129 (CN); GUO, Yijun, Shenzhen Guangdong 518129 (CN); WU, Qijun, Shenzhen Guangdong 518129 (CN)
(74) Representative: Pfenning, Meinig & Partner mbB
(86) International application number: PCT/CN2016/073811
(87) International publication number: WO 2017/028514

(57) **Abstract**

The present invention discloses a data storage method and apparatus, and a data read method and apparatus, so as to resolve a technical problem that a data storage process is relatively complex. The data storage method includes: receiving to-be-written first data that is in a first format and that is delivered by an application layer; obtaining a first mapping relationship between data in the first format and data in a second format, where the second format is a KeyValue format, and the first mapping relationship is used to indicate a row attribute and a column attribute that are corresponding to each value obtained by converting the data in the first format; converting the format of the first data into the second format according to the first mapping relationship, so as to obtain second data; and storing the second data.

## Description

### TECHNICAL FIELD

The present invention relates to the field of storage technologies, and in particular, to a data storage method and apparatus, and a data read method and apparatus.

### BACKGROUND

In a distributed database, data is generally stored in a KeyValue (key-value) form. A key part is used to uniquely identify a row of data, and is also information used to quickly retrieve data. For example, data may be found by searching for a key of the data. The key part is generally a specific structure customized by a user. A value part is used to store actual data. It may be considered that the key is identification information, and is used to differentiate different data. The value part stores real data content.

When data is stored in a KeyValue format, there are different storage manners. For example, only one value is stored in one row. Therefore, if one piece of data includes multiple values, the data may need to be stored in multiple rows. This storage manner may be referred to as a single-row single-value manner. Alternatively, for example, multiple values are stored in one row. Therefore, one piece of data may be stored in one row in total. This storage manner may be referred to as a single-row multiple-value manner.

In the prior art, an application layer needs to specify a data storage manner when storing data in the KeyValue format each time. For example, a quantity of values stored in each row needs to be specified. When reading data, the application layer needs to convert read data in the KeyValue format into original data.

It can be learned that in the prior art, the application layer needs to get involved in specifying or implementing a storage manner and a storage policy. This brings bad experience to a user and relatively large burden to the application layer. In addition, when storing data of different applications, the application layer needs to separately specify a data storage manner, and consequently a storage process is relatively complex.

### SUMMARY

Embodiments of the present invention provide a data storage method and apparatus, and a data read method and apparatus, so as to resolve a technical problem that a data storage process is relatively complex.

According to a first aspect, a data storage method is provided, including:
receiving to-be-written first data that is in a first format and that is delivered by an application layer;
obtaining a first mapping relationship between data in the first format and data in a second format, where the second format is a KeyValue format, and the first mapping relationship is used to indicate a row attribute and a column attribute that are corresponding to each value obtained by converting the data in the first format;
converting the format of the first data into the second format according to the first mapping relationship, so as to obtain second data; and
storing the second data.

With reference to the first aspect, in a first possible implementation manner of the first aspect, after the storing the second data, the method further includes:
restoring the second data to the first data in the first format according to the first mapping relationship that has not been updated;
updating the stored first mapping relationship by using a second mapping relationship, where the second mapping relationship is used to indicate a row attribute and a column attribute that are corresponding to each value obtained by converting the data in the first format, and the row attribute corresponding to each value in the first mapping relationship is different from the row attribute corresponding to each value in the second mapping relationship, and/or the column attribute corresponding to each value in the first mapping relationship is different from the column attribute corresponding to each value in the second mapping relationship;
converting the format of the first data into a third format according to the first mapping relationship that has been updated, so as to obtain third data; and
updating the stored second data according to the third data.

With reference to the first aspect, in a second possible implementation manner of the first aspect, after the storing the second data, the method further includes:
reading the stored second data if an instruction that is delivered by the application layer to read the first data is received;
converting the format of the second data into the first format according to the first mapping relationship, so as to obtain fourth data; and
feeding back and outputting the fourth data to the application layer.

According to a second aspect, a data read method is provided, including:
reading stored second data if an instruction that is delivered by an application layer to read first data is received;
converting a KeyValue format of the second data into a first format according to a first mapping relationship, where the first mapping relationship is used to indicate a row attribute and a column attribute that are corresponding to each value that is in the KeyValue format and that is obtained by converting the first data in the first format; and
feeding back and outputting the data in the converted format to the application layer.

With reference to the second aspect, in a first possible implementation manner of the second aspect, before the reading stored second data, the method further includes:
receiving the to-be-written first data that is in the first format and that is delivered by the application layer;
obtaining the first mapping relationship between data in the first format and data in a second format, where the second format is the KeyValue format;
converting the format of the first data into the second format according to the first mapping relationship, so as to obtain the second data; and
storing the second data.

With reference to the second aspect, in a second possible implementation manner of the second aspect, after the storing the second data, the method further includes:
restoring the second data to the first data in the first format according to the first mapping relationship that has not been updated;
updating the stored first mapping relationship by using a second mapping relationship, where the second mapping relationship is used to indicate a row attribute and a column attribute that are corresponding to each value obtained by converting the data in the first format, and the row attribute corresponding to each value in the first mapping relationship is different from the row attribute corresponding to each value in the second mapping relationship, and/or the column attribute corresponding to each value in the first mapping relationship is different from the column attribute corresponding to each value in the second mapping relationship;
converting the format of the first data into a third format according to the first mapping relationship that has been updated, so as to obtain third data; and
updating the stored second data according to the third data.

According to a third aspect, a data storage apparatus is provided, including:
a receiving module, configured to receive to-be-written first data that is in a first format and that is delivered by an application layer;
an obtaining module, configured to obtain a first mapping relationship between data in the first format and data in a second format, where the second format is a KeyValue format, and the first mapping relationship is used to indicate a row attribute and a column attribute that are corresponding to each value obtained by converting the data in the first format;
a conversion module, configured to convert the format of the first data into the second format according to the first mapping relationship, so as to obtain second data; and
an operation module, configured to store the second data.

With reference to the third aspect, in a first possible implementation manner of the third aspect, the apparatus further includes a restoration module, a first updating module, and a second updating module, where
the restoration module is configured to: after the operation module stores the second data, restore the second data to the first data in the first format according to the first mapping relationship that has not been updated;
the first updating module is configured to update the stored first mapping relationship by using a second mapping relationship, where the second mapping relationship is used to indicate a row attribute and a column attribute that are corresponding to each value obtained by converting the data in the first format, and the row attribute corresponding to each value in the first mapping relationship is different from the row attribute corresponding to each value in the second mapping relationship, and/or the column attribute corresponding to each value in the first mapping relationship is different from the column attribute corresponding to each value in the second mapping relationship, where
the conversion module is further configured to convert the format of the first data into a third format according to the first mapping relationship that has been updated, so as to obtain third data; and
the second updating module is configured to update the stored second data according to the third data.

With reference to the third aspect, in a second possible implementation manner of the third aspect, the apparatus further includes a read module and an output module, where
the read module is configured to: after the operation module stores the second data, read the stored second data if an instruction that is delivered by the application layer to read the first data is received, where
the conversion module is further configured to convert the format of the second data into the first format according to the first mapping relationship, so as to obtain fourth data; and
the output module is configured to feed back and output the fourth data to the application layer.

According to a fourth aspect, a data read apparatus is provided, including:
a read module, configured to read stored second data if an instruction that is delivered by an application layer to read first data is received;
a conversion module, configured to convert a KeyValue format of the second data into a first format according to a first mapping relationship, where the first mapping relationship is used to indicate a row attribute and a column attribute that are corresponding to each value that is in the KeyValue format and that is obtained by converting the first data in the first format; and
an output module, configured to feed back and output the data in the converted format to the application layer.

With reference to the fourth aspect, in a first possible implementation manner of the fourth aspect, the apparatus further includes a receiving module, an obtaining module, and an operation module, where
the receiving module is configured to: before the read module reads the stored second data, receive the to-be-written first data that is in the first format and that is delivered by the application layer;
the obtaining module is configured to obtain the first mapping relationship between data in the first format and data in a second format, where the second format is the KeyValue format, where
the conversion module is further configured to convert the format of the first data into the second format according to the first mapping relationship, so as to obtain the second data; and
the operation module is configured to store the second data.

With reference to the fourth aspect, in a second possible implementation manner of the fourth aspect, the apparatus further includes a restoration module, a first updating module, and a second updating module, where
the restoration module is configured to: after the operation module stores the second data, restore the second data to the first data in the first format according to the first mapping relationship that has not been updated;
the first updating module is configured to update the stored first mapping relationship by using a second mapping relationship, where the second mapping relationship is used to indicate a row attribute and a column attribute that are corresponding to each value obtained by converting the data in the first format, and the row attribute corresponding to each value in the first mapping relationship is different from the row attribute corresponding to each value in the second mapping relationship, and/or the column attribute corresponding to each value in the first mapping relationship is different from the column attribute corresponding to each value in the second mapping relationship, where
the conversion module is further configured to convert the format of the first data into a third format according to the first mapping relationship that has been updated, so as to obtain third data; and
the second updating module is configured to update the stored second data according to the third data.

According to a fifth aspect, a data storage apparatus is provided, including:
a receiver, configured to receive to-be-written first data that is in a first format and that is delivered by an application layer;
a processor, configured to obtain a first mapping relationship between data in the first format and data in a second format, and convert the format of the first data into the second format according to the first mapping relationship, so as to obtain second data, where the second format is a KeyValue format, and the first mapping relationship is used to indicate a row attribute and a column attribute that are corresponding to each value obtained by converting the data in the first format; and
a memory, configured to store the second data.

With reference to the fifth aspect, in a first possible implementation manner of the fifth aspect, the processor is further configured to:
after the memory stores the second data, restore the second data to the first data in the first format according to the first mapping relationship that has not been updated;
update the stored first mapping relationship by using a second mapping relationship, where the second mapping relationship is used to indicate a row attribute and a column attribute that are corresponding to each value obtained by converting the data in the first format, and the row attribute corresponding to each value in the first mapping relationship is different from the row attribute corresponding to each value in the second mapping relationship, and/or the column attribute corresponding to each value in the first mapping relationship is different from the column attribute corresponding to each value in the second mapping relationship;
convert the format of the first data into a third format according to the first mapping relationship that has been updated, so as to obtain third data; and
update the stored second data according to the third data.

With reference to the fifth aspect, in a second possible implementation manner of the fifth aspect, the apparatus further includes a transmitter, where
the processor is further configured to: after the memory stores the second data, read the stored second data if an instruction that is delivered by the application layer to read the first data is received; and convert the format of the second data into the first format according to the first mapping relationship, so as to obtain fourth data; and
the transmitter is configured to feed back and output the fourth data to the application layer.

According to a sixth aspect, a data read apparatus is provided, including:
a processor, configured to read stored second data if an instruction that is delivered by an application layer to read first data is received; and convert, according to a first mapping relationship, a KeyValue KeyValue format of the second data stored in the memory into a first format, where the first mapping relationship is used to indicate a row attribute and a column attribute that are corresponding to each value that is in the KeyValue format and that is obtained by converting the first data in the first format; and
a transmitter, configured to feed back and output the data in the converted format to the application layer.

With reference to the sixth aspect, in a first possible implementation manner of the sixth aspect, the apparatus further includes a receiver, where
the receiver is configured to: before the processor reads the stored second data, receive the to-be-written first data that is in the first format and that is delivered by the application layer, where
the processor is further configured to: obtain the first mapping relationship between data in the first format and data in a second format, where the second format is the KeyValue format; and convert the format of the first data into the second format according to the first mapping relationship, so as to obtain the second data; and
the memory is further configured to store the second data.

With reference to the sixth aspect, in a second possible implementation manner of the sixth aspect, the processor is further configured to:
after the memory stores the second data, restore the second data to the first data in the first format according to the first mapping relationship that has not been updated;
update the stored first mapping relationship by using a second mapping relationship, where the second mapping relationship is used to indicate a row attribute and a column attribute that are corresponding to each value obtained by converting the data in the first format, and the row attribute corresponding to each value in the first mapping relationship is different from the row attribute corresponding to each value in the second mapping relationship, and/or the column attribute corresponding to each value in the first mapping relationship is different from the column attribute corresponding to each value in the second mapping relationship;
convert the format of the first data into a third format according to the first mapping relationship that has been updated, so as to obtain third data; and
update the stored second data according to the third data.

According to a seventh aspect, a data storage apparatus is provided, where the data storage apparatus includes a processor and a memory, and the processor and the memory are connected by using a bus; and
the memory is configured to store a computer-executable instruction, and when the data storage apparatus runs, the processor reads the computer-executable instruction stored in the memory, so that the data storage apparatus executes the data storage method according to any one of the foregoing aspects.

According to a seventh aspect, a data read apparatus is provided, where the data read apparatus includes a processor and a memory, and the processor and the memory are connected by using a bus; and
the memory is configured to store a computer-executable instruction, and when the data read apparatus runs, the processor reads the computer-executable instruction stored in the memory, so that the data read apparatus executes the data read method according to any one of the foregoing aspects.

In the embodiments of the present invention, a mapping relationship (that is, a first mapping relationship) between a format of data before stored and a KeyValue format is set, and during data storage, a device automatically performs storage according to the first mapping relationship, and a user does not need to get much involved. In addition, an application layer does not need to complete setting of a mapping relationship, storage of a mapping relationship, or format conversion. This brings a relatively friendly use environment to the user, improves user experience, and reduces burden on the application layer. After the mapping relationship is set, data conversion and storage may be directly performed according to the mapping relationship, without a need of specifying a data storage manner each time. This reduces complexity of a data processing process, and facilitates application promotion.

### BRIEF DESCRIPTION OF DRAWINGS

FIG. 1 is a flowchart of a data storage method according to an embodiment of the present invention;
FIG. 2 is a flowchart of a data read method according to an embodiment of the present invention;
FIG. 3A is a schematic diagram of a data storage process according to an embodiment of the present invention;
FIG. 3B is a schematic diagram of a data read process according to an embodiment of the present invention;
FIG. 4 is a structural block diagram of a data storage apparatus according to an embodiment of the present invention;
FIG. 5 is a structural block diagram of a data read apparatus according to an embodiment of the present invention;
FIG. 6A and FIG. 6B are schematic structural diagrams of a data storage apparatus according to an embodiment of the present invention;
FIG. 7A and FIG. 7B are schematic structural diagrams of a data read apparatus according to an embodiment of the present invention;
FIG. 8 is another schematic structural diagram of a data storage apparatus according to an embodiment of the present invention; and
FIG. 9 is another schematic structural diagram of a data read apparatus according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions in the embodiments of the present invention may be applied to a distributed database of a KeyValue type.

In the KeyValue distributed database, all data exists in a KeyValue form. A key part of data is used to uniquely identify a row of data record, and is also index information used to retrieve the data. The key part of the data may be a specific structure customized by a user. A value part of the data is used to store real data content.

Examples are used to describe characteristics of the KeyValue distributed database.

### Example 1:

The KeyValue distributed database may be used to store web page information. For example, a key may be used to store a URL (Uniform Resource Locator, uniform resource locator) of a web page, and actual content of the web page indicated by the URL may be stored in a value part. Details are as follows:
Key (URL) -> Value (Page Content (page content)).

### Example 2:

The KeyValue distributed database may be used to store some basic information of a user.

It is assumed that the basic information of the user includes the following fields:
{ID (Identity, identity), Name (name), Address (address), Age (age), Gender (gender), Phone (phone), Education (education)}.

When the KeyValue distributed database is used to store the basic information, the ID may serve as content of a key part, and the others serve as content of a value part. In addition, it may be considered that the basic information includes multiple values. That is, the Name, the Address, the Age, the Gender, the Phone, and the Education may be separately considered as one value. When this type of information is to be stored, one row of data record in the KeyValue distributed database may include only one value, or may include multiple values. If one row of data record includes only one value, this type of information may need to be stored in multiple rows. If one row of data record includes multiple values, this type of information may be stored in one row of record. For example:
when one row of data record includes multiple values,
Key (ID) -> Value (Name, Address, Age, Gender, Phone, Education);
when one row of data record includes one value,
Key (ID) -> Value (Name)
Key (ID) -> Value (Address)
Key (ID) -> Value (Age)
Key (ID) -> Value (Gender)
Key (ID) -> Value (Phone)
Key (ID) -> Value (Education).

Certainly, if one row of data record includes multiple values, one piece of basic information may also be stored in multiple rows. Specifically, this depends on a quantity of values included in one row of data record.

It can be learned that a manner of using the KeyValue distributed database for data storage is relatively flexible, and is different from a manner of using a conventional relational database. For example, in the conventional relational database, columns (attributes) in a stored data table need to be predefined. Once defined, the columns are generally not allowed to be changed at random, unless a relatively high price is paid. In the KeyValue distributed database, a user may not need to predefine columns (KeyValue) in a data table, and may temporarily define the columns during use. No limitation is imposed on a quantity of values included in one row of data record.

### Example 3:

It is assumed that basic information of a user initially includes the following fields:
{ID, Name, Address, Age, Gender, Phone, Education}.

This basic information is stored in the KeyValue distributed database according to a format in which one row of data record includes one value, and a detailed storage manner is described above.

After a period of time, the user adds one attribute to the basic information, that is, adds one field, which is Company (company). In this case, the basic information is changed into:
{ID, Name, Address, Age, Gender, Phone, Education, Company}.

In this case, only one row of data record needs to be newly added to the KeyValue distributed database for the basic information, and the added row of data record is as follows:
Key (ID) -> Value (Company).

Newly-added content does not affect existing data records at all.

Generally, each row of data record (in the embodiments of the present invention, one row of data record may also be understood as one data record) in the KeyValue distributed database usually has a specific structural definition, and the structural definition may include any one or more of the following information:
Key: may be used to mark uniqueness of each row of data record, and may be used to retrieve data;
Timestamp (timestamp): is used to record a time at which a row of data record is generated;
Type (type): is used to record a type of a row of data record;
Value: is used to record data content; and
column name information: is similar to a concept of a column name in a common relational database, and may reflect a specific part of information of data that is recorded in a row of data record.

In the embodiments of the present invention, a first format may be any type of data format. For example, the first format may be the foregoing format of the basic information of the user, or may be a format of web page data, or the like.

In the KeyValue distributed database, although single-row multiple-value is a representation of flexibility of the KeyValue distributed database, some data expansion may be caused in actual application. For example, in the foregoing Example 2, storage space occupied when the single-row single-value form is used for storage is less than that occupied when the single-row multiple-value form is used for storage. This is because the KeyValue has a specific structural definition, and the structural definition causes some data expansion.

Therefore, it is recommended that a minimum quantity of KeyValues be placed in one row of data record. In this way, more storage space is saved.

In addition, in the embodiments of the present invention, an application layer does not need to execute processes such as setting a mapping relationship, storing the mapping relationship, and converting a format, and another module under the application layer may execute these processes. These processes are invisible to the application layer. Therefore, user experience is relatively good, and burden on the application layer is relatively small. For example, a specific data platform running under the application layer may be provided, and the data platform may have corresponding middleware. The middleware may be understood to be capable of providing a function interface that is configured to complete some operations by using the data platform. A corresponding operation can be completed in the data platform by invoking the function interface of the middleware. Therefore, in the embodiments of the present invention, all the processes such as setting a mapping relationship, storing the mapping relationship, and converting a format can be completed in the data platform in a manner of invoking the middleware.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects unless otherwise noted.

The following further describes the embodiments of the present invention in detail with reference to the accompanying drawings of this specification.

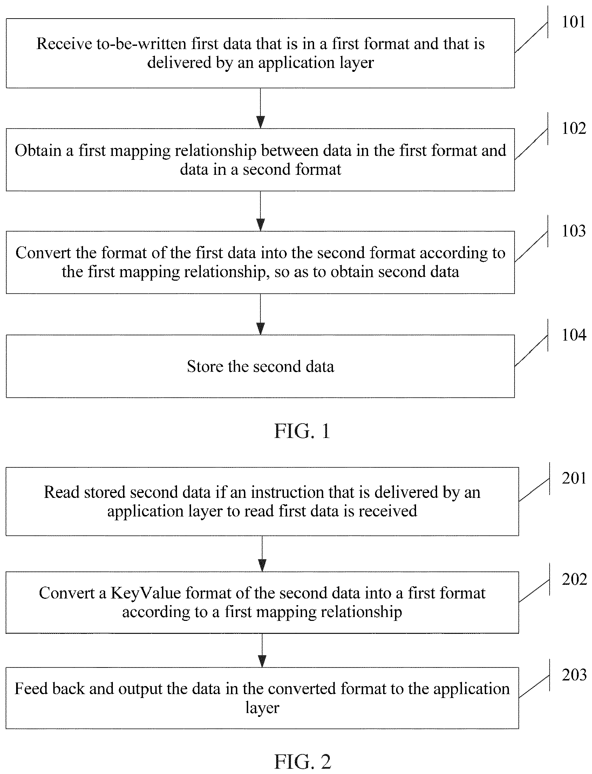

Referring to FIG. 1, an embodiment of the present invention provides a data storage method. A procedure of the method is described as follows:
Step 101: Receive to-be-written first data that is in a first format and that is delivered by an application layer.

A user writes the first data into a KeyValue distributed database. When the user writes the first data, a format of the first data is the first format. The user interacts with the application layer, that is, the application layer receives the first data, and delivers the to-be-written first data to another module. For example, the another module may be the foregoing data platform including the middleware. Correspondingly, the middleware may obtain the first data in step 101. In this way, subsequent operations such as whole format conversion and storage of the first data are invisible to the application layer.

Step 102: Obtain a first mapping relationship between data in the first format and data in a second format.

The second format is a KeyValue format, and the mapping relationship is used to indicate a row attribute and a column attribute that are corresponding to each value obtained by converting the data in the first format. In this embodiment of the present invention, a possible mapping relationship between the data in the first format and the data in the second format is referred to as the first mapping relationship.

That is, a system pre-stores the first mapping relationship between the data in the first format and the data in the KeyValue format. For example, the first mapping relationship may be stored in the database, and a storage location may be invisible to the application layer. After the data in the first format is converted into the data in the KeyValue format, the converted data may include one key and at least one value. According to the first mapping relationship, a row attribute and a column attribute of each value may be learned, that is, a column and a row to which each value belongs are learned. Therefore, how to store each value may be determined.

The mapping relationship may be preset in the system. For example, a default mapping relationship in the system may be used, or the mapping relationship may be preset by the user. No limitation is imposed on this in the present invention.

Optionally, in another embodiment of the present invention, before the receiving to-be-written first data in a first format, the method further includes:
setting and storing a first mapping relationship according to the first format and the second format; or
receiving and storing a first mapping relationship.

That is, a system may predefine the first mapping relationship, or the first mapping relationship may be preset by a user. For example, the system may store the first mapping relationship in a database, such as a database in the foregoing specific data platform, or store the first mapping relationship in a corresponding file. No matter where the first mapping relationship is stored, the first mapping relationship is invisible to the application layer. No limitation is imposed on a specific storage location in the present invention.

In addition, after the mapping relationship is stored, the mapping relationship may be changed according to a condition. Generally, for a data format, there is only one mapping relationship between the data format and the KeyValue. Otherwise, a case of data conversion mess may occur. For example, the first mapping relationship between the data in the first format and the data in the KeyValue format is pre-stored. If another mapping relationship between the data in the first format and the data in the KeyValue format needs to be stored, the first mapping relationship needs to be changed, or the first mapping relationship is first deleted, and then the obtained another mapping relationship is stored. Whether a new mapping relationship is obtained by directly modifying the original mapping relationship, or the new mapping relationship is stored after the original mapping relationship is deleted, it may be considered that the new mapping relationship is obtained by changing the original mapping relationship.

Optionally, in another embodiment of the present invention, before the receiving to-be-written first data in a first format, the method further includes:
setting and storing a third mapping relationship according to the first format and the second format; or
receiving and storing a third mapping relationship.

The third mapping relationship is used to indicate a row attribute and a column attribute that are corresponding to each value obtained by converting the data in the first format.

Optionally, in another embodiment of the present invention, after the storing a third mapping relationship, the method further includes:
updating the third mapping relationship according to the first mapping relationship, where the row attribute corresponding to each value in the first mapping relationship is different from the row attribute corresponding to each value in the third mapping relationship, and/or the column attribute corresponding to each value in the first mapping relationship is different from the column attribute corresponding to each value in the third mapping relationship; and
storing the updated third mapping relationship.

The updated third mapping relationship is the first mapping relationship. Updating the third mapping relationship by using the first mapping relationship may be understood as replacing the third mapping relationship with the first mapping relationship.

That is, in this embodiment, before data is stored, the mapping relationship is changed once. That is, an initially stored mapping relationship is the third mapping relationship, and is subsequently changed into the first mapping relationship. When the mapping relationship needs to be changed, if no data has been stored according to the to-be-changed mapping relationship, the to-be-changed mapping relationship may be directly changed, as described in this embodiment. If data has been stored according to the to-be-changed mapping relationship, the data needs to be re-stored. This part is described in the following.

Step 103: Convert the format of the first data into the second format according to the first mapping relationship, so as to obtain second data.

For example, if the foregoing specific data platform receives the first data, the specific data platform may invoke the first mapping relationship after receiving the first data. The format of the first data may be converted into the second format according to the first mapping relationship. For example, the converted first data is referred to as second data.

For example, the first data is:
{ColA, ColB, ColC, ColD, ColE}.

The second data obtained by means of conversion according to the first mapping relationship is:
Key (ID) -> Value (ColA)
Key (ID) -> Value (ColB, ColC)
Key (ID) -> Value (ColD, ColE).

That is, as defined in the first mapping relationship, a row attribute of the first value (that is, ColA) in the first format is a row attribute of the first row, and a column attribute of the first value is a column attribute of the second column (for example, a column in which an ID is located is the first column); row attributes of the second value (that is, ColB) and the third value (that is, ColC) are a row attribute of the second row, a column attribute of the second value is a column attribute of the second column, and a column attribute of the third value is a column attribute of the third column; and row attributes of the fourth value (that is, ColD) and the fifth value (that is, ColB) are a row attribute of the third row, a column attribute of the fourth value is the column attribute of the second column, and a column attribute of the fifth value is the column attribute of the third column.

Step 104: Store the second data.

That is, after the second data is obtained, the second data may be stored. For example, the second data may be stored in the KeyValue database. For example, the KeyValue database may include multiple data tables. For example, if one mapping relationship is corresponding to one data table, the second data may be stored in a data table corresponding to the first mapping relationship. Certainly, the second data may also be stored in another possible location, and this is not limited in the present invention.

The foregoing describes a case in which the mapping relationship may be changed before data is stored, and the following describes a case of changing the mapping relationship after data is stored.

Optionally, in another embodiment of the present invention, after the storing the second data, the method further includes:
restoring the second data to the first data in the first format according to the first mapping relationship that has not been updated;
updating the stored first mapping relationship by using a second mapping relationship, where the second mapping relationship is used to indicate a row attribute and a column attribute that are corresponding to each value obtained by converting the data in the first format, and the row attribute corresponding to each value in the first mapping relationship is different from the row attribute corresponding to each value in the second mapping relationship, and/or the column attribute corresponding to each value in the first mapping relationship is different from the column attribute corresponding to each value in the second mapping relationship;
converting the format of the first data into a third format according to the first mapping relationship that has been updated, so as to obtain third data; and
updating the stored second data according to the third data.

The first mapping relationship that has been updated is the second mapping relationship. Updating the first mapping relationship by using the second mapping relationship may be understood as replacing the first mapping relationship with the second mapping relationship.

In this embodiment, when the first mapping relationship is to be updated, if data corresponding to the first mapping relationship has been stored, for example, the first data has been stored, a format of the data corresponding to the first mapping relationship may be restored to an original format corresponding to the data, according to the first mapping relationship and before the update. For example, the original format corresponding to the data is the first format. After the first mapping relationship is updated, the data in the first format is mapped according to the first mapping relationship that has been updated, and data obtained after the mapping is stored. For example, in this embodiment of the present invention, the data obtained by mapping the first data according to the first mapping relationship that has been updated is referred to as third data. Updating the stored second data according to the third data may be understood as replacing the second data with the third data.

In this embodiment, two data formats corresponding to the second mapping relationship are respectively the first format and the third format, and the third format may also be the KeyValue format. The row attribute corresponding to each value in the third mapping relationship may be the same as or may be different from the row attribute corresponding to each value in the second mapping relationship; and/or the column attribute corresponding to each value in the third mapping relationship may be the same as or may be different from the column attribute corresponding to each value in the second mapping relationship.

It should be noted that the first mapping relationship, the second mapping relationship, and the third mapping relationship are all mapping relationships between the data in the first format and the data in the KeyValue format. Therefore, regardless of whether the data in the first format is mapped according to the first mapping relationship, the second mapping relationship, or the third mapping relationship, obtained data is in the second format, that is, the data is in the KeyValue format. However, in the obtained data in the KeyValue format, the row attribute, the column attribute, or the like corresponding to each value may be different.

For example, the first data is:
{ColA, ColB, ColC, ColD, ColE}.

The third data obtained by means of conversion according to the third mapping relationship is:
Key (ID) -> Value (ColA)
Key (ID) -> Value (ColB, ColC, ColD)
Key (ID) -> Value (ColE).

That is, as defined in the second mapping relationship, a row attribute of the first value (that is, ColA) in the first format is a row attribute of the first row, and a column attribute of the first value is a column attribute of the second column (for example, a column in which an ID is located is the first column); row attributes of the second value (that is, ColB), the third value (that is, ColC), and the fourth value (that is, ColD) are a row attribute of the second row, a column attribute of the second value is a column attribute of the second column, a column attribute of the third value is a column attribute of the third column, and a column attribute of the fourth value is a column attribute of the fourth column; and a row attribute of the fifth value (that is, ColB) is a row attribute of the third row, and a column attribute of the fifth value is the column attribute of the second column. With reference to the foregoing examples, it can be learned that compared with the first mapping relationship, in the second mapping relationship, the row attribute and the column attribute of ColD change, and the column attribute of ColE changes.

Optionally, in another embodiment of the present invention, after the storing the second data, the method further includes:
reading the stored second data if an instruction that is delivered by the application layer to read the first data is received;
converting the format of the second data into the first format according to the first mapping relationship, so as to obtain fourth data; and
feeding back and outputting the fourth data to the application layer.

That is, because a whole processing process is invisible to the application layer, the application layer still needs to read the first data. In this case, after receiving the instruction of reading the first data, the application layer may send the instruction to another module, for example, to the foregoing specific data platform. Therefore, after receiving the instruction of reading the first data, the another module may invoke the first mapping relationship again (in this embodiment, the first mapping relationship is not updated according to the second mapping relationship) to re-convert, according to the first mapping relationship, the format of the stored second data corresponding to the first data into the first format, so as to obtain the fourth data, and feed back the fourth data to the application layer.

In another embodiment of the present invention, if the first mapping relationship has been updated according to the second mapping relationship, after the updating the stored second data according to the third data, the method further includes:
reading the stored third data if an instruction that is delivered by the application layer to read the first data is received;
converting the format of the third data into the first format according to the second mapping relationship, so as to obtain fifth data; and
feeding back and outputting the fifth data to the application layer.

Likewise, because a whole processing process is invisible to the application layer, the application layer still needs to read the first data. In this case, after receiving the instruction of reading the first data, the application layer may send the instruction to another module, for example, to the foregoing specific data platform. Therefore, after receiving the instruction of reading the first data, the another module may invoke the second mapping relationship (in this embodiment, the first mapping relationship is updated according to the second mapping relationship) to re-convert, according to the second mapping relationship, the format of the stored third data corresponding to the first data into the first format, so as to obtain the fifth data, and feed back the fifth data to the application layer.

In the prior art, an application layer needs to specify a data storage manner when storing data in the KeyValue format each time. For example, a quantity of values stored in each row needs to be specified. When reading data, the application layer needs to convert read data in the KeyValue format into original data. It can be learned that the application layer needs to get involved in specifying or implementing a storage policy. This brings bad experience to a user and relatively large burden to the application layer. In addition, when storing the data, the application layer needs to specify the data storage manner, and a process is relatively complex. However, according to the storage and read manner in this embodiment of the present invention, because a mapping relationship is preset, both storage and read may be directly performed according to the mapping relationship, and a user does not need to get much involved. In addition, an application layer does not need to complete setting of a mapping relationship, storage of a mapping relationship, or format conversion. This brings better experience to the user, and reduces burden on the application layer. After the mapping relationship is set, data conversion and storage may be directly performed according to the mapping relationship, without a need of specifying a data storage manner each time. This reduces complexity of a data processing process, and simplifies a data storage process and a data read process.

For example, in another embodiment of the present invention, both a mapping relationship and data may be stored in the foregoing specific data platform. If an operation such as setting of the mapping relationship, updating of the mapping relationship, deletion of the mapping relationship, invoking of the mapping relationship, data read, data write, or data conversion needs to be executed, middleware may be used to invoke a corresponding function interface, so as to execute the operation on information such as the mapping relationship or data stored in the data platform.

Referring to FIG. 2, based on a same inventive concept and the foregoing embodiments, an embodiment of the present invention provides a data read method, and a procedure of the method is described as follows:
Step 201: Read stored second data if an instruction that is delivered by an application layer to read first data is received.
Step 202: Convert a KeyValue format of the second data into a first format according to a first mapping relationship. The first mapping relationship is used to indicate a row attribute and a column attribute that are corresponding to each value that is in the KeyValue format and that is obtained by converting data in the first format.
Step 203: Feed back and output the data in the converted format to the application layer.

In this embodiment of the present invention, the data in the converted format may be the fourth data in the foregoing embodiment.

Optionally, in another embodiment of the present invention, before the reading stored second data, the method further includes:
receiving the to-be-written first data that is in the first format and that is delivered by the application layer;
obtaining the first mapping relationship between data in the first format and data in a second format, where the second format is the KeyValue format;
converting the format of the first data into the second format according to the first mapping relationship, so as to obtain the second data; and
storing the second data.

Optionally, in another embodiment of the present invention, after the storing the second data, the method further includes:
restoring the second data to the first data in the first format according to the first mapping relationship that has not been updated;
updating the stored first mapping relationship by using a second mapping relationship, where the second mapping relationship is used to indicate a row attribute and a column attribute that are corresponding to each value obtained by converting the data in the first format, and the row attribute corresponding to each value in the first mapping relationship is different from the row attribute corresponding to each value in the second mapping relationship, and/or the column attribute corresponding to each value in the first mapping relationship is different from the column attribute corresponding to each value in the second mapping relationship;
converting the format of the first data into a third format according to the first mapping relationship that has been updated, so as to obtain third data; and
updating the stored first data according to the third data.

The method described in the procedure of FIG. 2 is a data read method, and the method described in the procedure of FIG. 1 is a data storage method. The two methods are corresponding to each other, and cross-reference may be made to some implementation processes. Therefore, repeated content is not further described.

In this embodiment of the present invention, it may be considered that the application layer processes only the data in the first format, and whether the data in the first format is subsequently converted into data in another format (such as the second format or the third format) is invisible to the application layer. That is, a subsequent processing process is invisible to the application layer, so that a workload of the application layer is effectively reduced.

The following uses examples to describe the foregoing technical solution.

It is assumed that a user needs to store basic information of the user in a KeyValue distributed database, and a corresponding storage table, that is, a data table that is used to store the basic information of the user, has been created in the KeyValue distributed database. For example, a name of the storage table is UserInfo.

For example, the basic information of the user includes the following fields:
{ID, Name, Address, Age, Gender, Phone, Education}.

If the user uses the KeyValue distributed database for the first time, after understanding a KeyValue design concept of the KeyValue distributed database, the user may determine a quantity of values included in one row of data record, that is, determine a data storage manner, that is, determine a mapping relationship (for example, a first mapping relationship). It is assumed that the user determines to store basic information of one user in two rows of data records.

In this case, the user needs to invoke an interface for defining metadata provided in this embodiment of the present invention, and the first mapping relationship is defined as follows:
KeyValue 1: Key (ID) -> {Name}
KeyValue 2: Key (ID) -> {Address, Age, Gender, Phone, Education}.

For example, the first column in a row of data record is uniformly determined as record content of a key, and content of a value is recorded from the second column. For example, KeyValue 1 is corresponding to the first row in the storage table, and KeyValue 1 is corresponding to the second row in the storage table. Therefore, the first mapping relationship may indicate that in all to-be-stored values, a column attribute of Name is a column attribute of the second column, and a row attribute of Name is a row attribute of the first row; a column attribute of Address is the column attribute of the second column, and a row attribute of Address is a row attribute of the second row; a column attribute of Age is a column attribute of the third column, and a row attribute of Age is the row attribute of the second row; a column attribute of Gender is a column attribute of the fourth column, and a row attribute of Gender is the row attribute of the second row; a column attribute of Phone is a column attribute of the fifth column, and a row attribute of Phone is the row attribute of the second row; and a column attribute of Education is a column attribute of the sixth column, and a row attribute of Education is the row attribute of the second row.

The first mapping relationship herein is merely an example, and a specific mapping relationship may be set by a system or a user according to a condition. In addition, to save more storage space, it is recommended that a minimum quantity of values be stored in one row of data record.

Certainly, if the user has pre-defined the first mapping relationship, the first mapping relationship may be directly used subsequently, and does not need to be defined each time.

The first mapping relationship may be obtained inside a system provided in this embodiment of the present invention. After writing data (for example, writing the first data) by using a write interface provided in an embodiment of the present invention, the user may obtain the first mapping relationship inside the system provided in this embodiment of the present invention. The data entered by the user may be converted into data in the KeyValue format by using the first mapping relationship, so as to obtain converted first data (that is, the second data). In addition, this conversion is invisible to an application. After the second data is obtained, the second data may be stored in UserInfo.

When reading data from UserInfo, the user may perform the reading by using a read interface provided in an embodiment of the present invention. The user may read the second data, or may read other data stored in UserInfo.

For example, the user attempts to read the second data. Inside the system provided in this embodiment of the present invention, two KeyValues are first read, that is, KeyValue 1 and KeyValue 2 described above, and then the system re-converts, according to the first mapping relationship, KeyValue 1 and KeyValue 2 into a data format needed by the user. The converted data format is as follows:
{ID, Name, Address, Age, Gender, Phone, Education}.

In this way, in a data read and write process, the user does not sense KeyValue information, and does not need to learn how data is specifically stored either. A user operation is quite simple, and operating efficiency is also improved.

For example, a metadata table provided in this embodiment of the present invention may be used to store a mapping relationship.

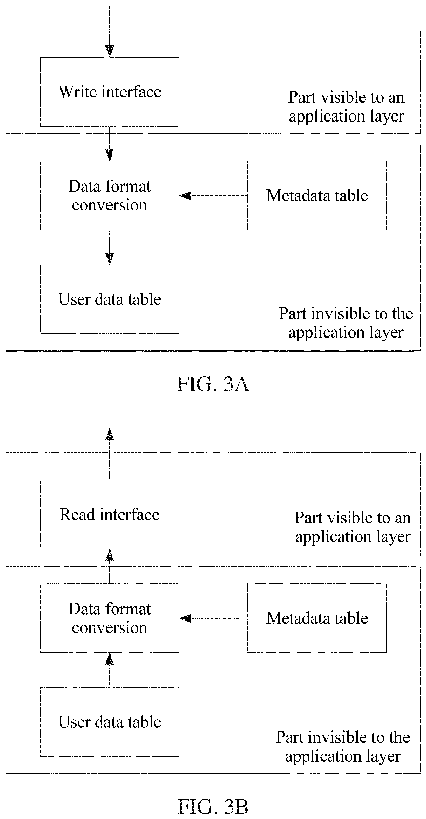

Referring to FIG. 3A, when the user writes the data by using the write interface provided in this embodiment of the present invention, the system automatically completes data format conversion inside a module invisible to the application layer with reference to a mapping relationship stored in the metadata table, that is, converts a format of original data into a corresponding KeyValue format, and then stores converted data in a corresponding data table (which is referred to as a user data table in FIG. 3A) of the KeyValue distributed database.

Further referring to FIG. 3B, when the user reads data from the data table (which is referred to as a user data table in FIG. 3B) of the KeyValue distributed database, also inside the module invisible to the application layer, data in a corresponding KeyValue format is first read, and then the format of the data in the KeyValue format is automatically restored to a format of original data visible to the user according to a mapping relationship stored in the metadata table. Likewise, a data format conversion process is invisible to the application layer.

It should be noted that the KeyValue distributed database may include one or more data tables. For details, refer to a structure of a KeyValue distributed database in the prior art.

The following describes apparatuses in embodiments of the present invention with reference to the accompanying drawings.

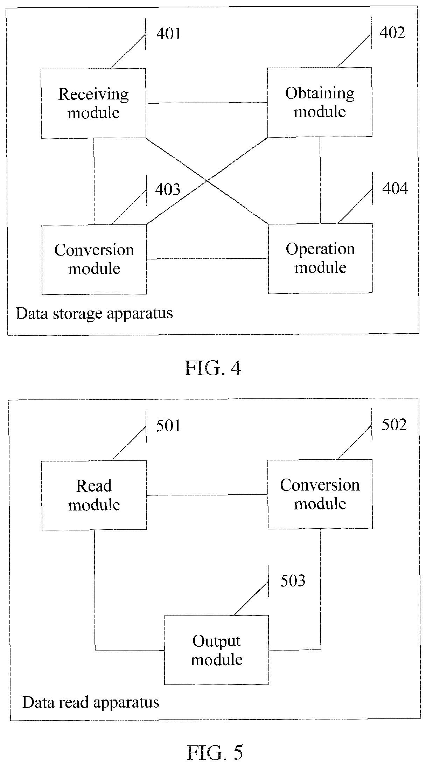

Referring to FIG. 4, based on a same inventive concept and the foregoing embodiments, an embodiment of the present invention provides a data storage apparatus. The apparatus includes a receiving module 401, an obtaining module 402, a conversion module 403, and an operation module 404.

The receiving module 401 is configured to receive to-be-written first data that is in a first format and that is delivered by an application layer.

The obtaining module 402 is configured to obtain a first mapping relationship between data in the first format and data in a second format, where the second format is a KeyValue format, and the first mapping relationship is used to indicate a row attribute and a column attribute that are corresponding to each value obtained by converting the data in the first format.

The conversion module 403 is configured to convert the format of the first data into the second format according to the first mapping relationship, so as to obtain second data.

The operation module 404 is configured to store the second data.

Optionally, in another embodiment of the present invention, the apparatus further includes a restoration module, a first updating module, and a second updating module.

The restoration module is configured to: after the operation module 404 stores the second data, restore the second data to the first data in the first format according to the first mapping relationship that has not been updated.

The first updating module is configured to update the stored first mapping relationship by using a second mapping relationship, where the second mapping relationship is used to indicate a row attribute and a column attribute that are corresponding to each value obtained by converting the data in the first format, and the row attribute corresponding to each value in the first mapping relationship is different from the row attribute corresponding to each value in the second mapping relationship, and/or the column attribute corresponding to each value in the first mapping relationship is different from the column attribute corresponding to each value in the second mapping relationship.

The conversion module 403 is further configured to convert the format of the first data into a third format according to the first mapping relationship that has been updated, so as to obtain third data.

The second updating module is configured to update the stored second data according to the third data.

Optionally, in another embodiment of the present invention, the apparatus further includes a read module and an output module.

The read module is configured to: after the operation module 404 stores the second data, read the stored first data if an instruction that is delivered by the application layer to read the first data is received.

The conversion module 403 is further configured to convert the format of the second data into the first format according to the first mapping relationship, so as to obtain fourth data.

The output module is configured to feed back and output the fourth data to the application layer.

Referring to FIG. 5, based on a same inventive concept and the foregoing embodiments, an embodiment of the present invention provides a data read apparatus. The apparatus may include a read module 501, a conversion module 502, and an output module 503.

The read module 501 is configured to read stored second data if an instruction that is delivered by an application layer to read first data is received.

The conversion module 502 is configured to convert a KeyValue format of the second data into a first format according to a first mapping relationship, where the first mapping relationship is used to indicate a row attribute and a column attribute that are corresponding to each value that is in the KeyValue format and that is obtained by converting the first data in the first format.

The output module 503 is configured to feed back and output the data in the converted format to the application layer.

Optionally, in another embodiment of the present invention, the apparatus further includes a receiving module, an obtaining module, and an operation module.

The receiving module is configured to: before the read module 501 reads the stored second data, receive the to-be-written first data that is in the first format and that is delivered by the application layer.

The obtaining module is configured to obtain the first mapping relationship between data in the first format and data in a second format, where the second format is the KeyValue format.

The conversion module 502 is further configured to convert the format of the first data into the second format according to the first mapping relationship, so as to obtain the second data.

The operation module is configured to store the second data.

Optionally, in another embodiment of the present invention, the apparatus further includes a restoration module, a first updating module, and a second updating module.

The restoration module is configured to: after the operation module stores the second data, restore the second data to the first data in the first format according to the first mapping relationship that has not been updated.

The first updating module is configured to update the stored first mapping relationship by using a second mapping relationship, where the second mapping relationship is used to indicate a row attribute and a column attribute that are corresponding to each value obtained by converting the data in the first format, and the row attribute corresponding to each value in the first mapping relationship is different from the row attribute corresponding to each value in the second mapping relationship, and/or the column attribute corresponding to each value in the first mapping relationship is different from the column attribute corresponding to each value in the second mapping relationship.

The conversion module 502 is further configured to convert the format of the first data into a third format according to the first mapping relationship that has been updated, so as to obtain third data.

The second updating module is configured to update the stored first data according to the third data.

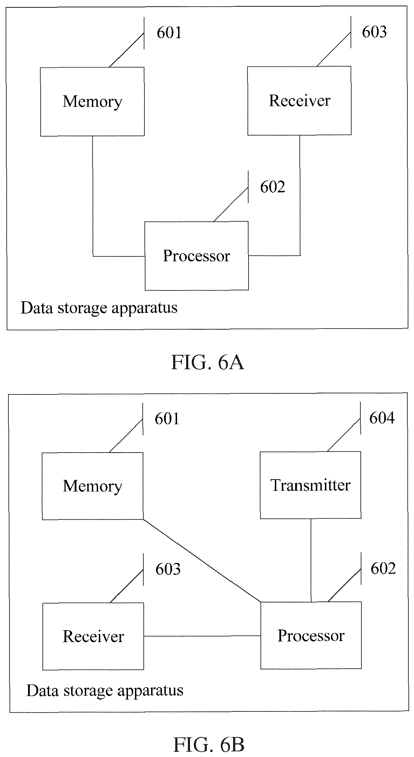

Referring to FIG. 6A, based on a same inventive concept and the foregoing embodiments, an embodiment of the present invention further provides a data storage apparatus. The data storage apparatus may include a memory 601, a processor 602, and a receiver 603. Optionally, referring to FIG. 6B, in another embodiment of the present invention, the data storage apparatus may further include a transmitter 604.

The processor 602 may be specifically a CPU (central processing unit) or an ASIC (Application Specific Integrated Circuit, application specific integrated circuit), or may be one or more integrated circuits used to control execution of programs, or may be a hardware circuit developed by using an FPGA (Field Programmable Gate Array, field programmable gate array), or may be a baseband chip. There may be one or more memories 601. The memory 601 may include a ROM (Read Only Memory, read only memory), a RAM (Random Access Memory, random access memory), and a magnetic disk memory. The receiver 603 and the transmitter 604 may belong to a radio frequency system, and the receiver 603 and the transmitter 604 are configured to perform network communication with an external device. Specifically, communication with an external device is performed by using a network such as the Ethernet, a radio access network, or a wireless local network. The receiver 603 and the transmitter 604 may be two elements physically independent of each other, or may be a physically same element.

The memory 601, the receiver 603, and the transmitter 604 may be connected to the processor 602 by using a bus, or may be separately connected to the processor 602 by using a dedicated connection wire.

By designing and programming the processor 602, code corresponding to the foregoing method is solidified into a chip, so that the method shown in the foregoing embodiment may be executed when the chip runs. How to design and program the processor 602 is a technology known to a person skilled in the art, and details are not described herein.

In this embodiment of the present invention, the data storage apparatus may be located in the foregoing another module (for example, the specific data platform), and therefore, may not directly interact with a user.

The receiver 603 is configured to receive to-be-written first data that is in a first format and that is delivered by an application layer.

The processor 602 is configured to obtain a first mapping relationship between data in the first format and data in a second format, and convert the format of the first data into the second format according to the first mapping relationship, so as to obtain second data, where the second format is a KeyValue format, and the first mapping relationship is used to indicate a row attribute and a column attribute that are corresponding to each value obtained by converting the data in the first format.

The memory 601 is configured to store the second data.

Optionally, in another embodiment of the present invention, the processor 602 is further configured to:
after the memory 601 stores the second data, restore the second data to the first data in the first format according to the first mapping relationship that has not been updated;
update the stored first mapping relationship by using a second mapping relationship, where the second mapping relationship is used to indicate a row attribute and a column attribute that are corresponding to each value obtained by converting the data in the first format, and the row attribute corresponding to each value in the first mapping relationship is different from the row attribute corresponding to each value in the second mapping relationship, and/or the column attribute corresponding to each value in the first mapping relationship is different from the column attribute corresponding to each value in the second mapping relationship;
convert the format of the first data into a third format according to the first mapping relationship that has been updated, so as to obtain third data; and
update the stored second data according to the third data.

Optionally, in another embodiment of the present invention, the processor 602 is further configured to:
after the memory 601 stores the second data, read the stored second data if an instruction that is delivered by the application layer to read the first data is received; and convert the format of the first data into the first format according to the first mapping relationship, so as to obtain fourth data.

The transmitter 604 is configured to feed back and output the fourth data to the application layer.

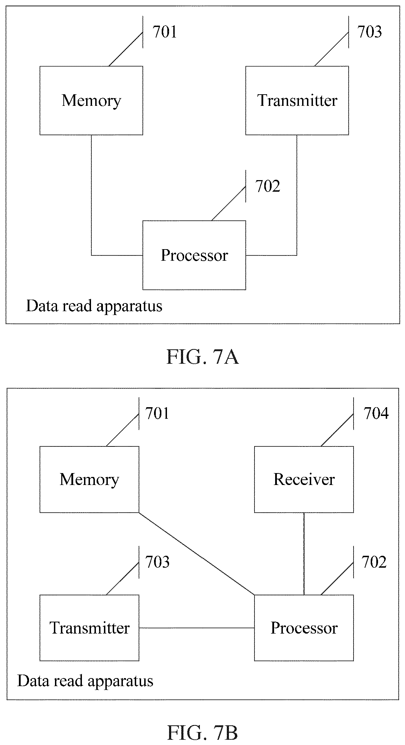

Referring to FIG. 7A, based on a same inventive concept and the foregoing embodiments, an embodiment of the present invention further provides a data read apparatus. The data read apparatus may include a memory 701, a processor 702, and a transmitter 703. Optionally, referring to FIG. 7B, in another embodiment of the present invention, the data read apparatus may further include a receiver 704.

The processor 702 may be specifically a CPU or an ASIC, or may be one or more integrated circuits used to control execution of programs, or may be a hardware circuit developed by using an FPGA, or may be a baseband chip. There may be one or more memories 701. The memory 701 may include a ROM, a RAM, and a magnetic disk memory. The transmitter 703 and the receiver 704 may belong to a radio frequency system, and the transmitter 703 and the receiver 704 are configured to perform network communication with an external device. Specifically, communication with an external device is performed by using a network such as the Ethernet, a radio access network, or a wireless local network. The transmitter 703 and the receiver 704 may be two elements physically independent of each other, or may be a physically same element.

The memory 701, the transmitter 703, and the receiver 704 may be connected to the processor 702 by using a bus, or may be separately connected to the processor 702 by using a dedicated connection wire.

By designing and programming the processor 702, code corresponding to the foregoing method is solidified into a chip, so that the method shown in the foregoing embodiment may be executed when the chip runs. How to design and program the processor 702 is a technology known to a person skilled in the art, and details are not described herein.

In this embodiment of the present invention,
the processor 702 is configured to read stored second data if an instruction that is delivered by an application layer to read first data is received; and convert, according to a first mapping relationship, a KeyValue format of the second data stored in the memory 701 into a first format, where the first mapping relationship is used to indicate a row attribute and a column attribute that are corresponding to each value that is in the KeyValue format and that is obtained by converting the first data in the first format; and
the transmitter 703 is configured to feed back and output the data in the converted format to the application layer.

Optionally, in another embodiment of the present invention,
the receiver 704 is configured to: before the processor 702 reads the stored second data, receive the to-be-written first data that is in the first format and that is delivered by the application layer.

The processor 702 is further configured to: obtain the first mapping relationship between data in the first format and data in a second format, where the second format is the KeyValue format; and convert the format of the first data into the second format according to the first mapping relationship, so as to obtain the second data.

The memory 701 is further configured to store the second data.

Optionally, in another embodiment of the present invention, the processor 702 is further configured to:
after the memory 701 stores the second data, restore the second data to the first data in the first format according to the first mapping relationship that has not been updated;
update the stored first mapping relationship by using a second mapping relationship, where the second mapping relationship is used to indicate a row attribute and a column attribute that are corresponding to each value obtained by converting the data in the first format, and the row attribute corresponding to each value in the first mapping relationship is different from the row attribute corresponding to each value in the second mapping relationship, and/or the column attribute corresponding to each value in the first mapping relationship is different from the column attribute corresponding to each value in the second mapping relationship;
convert the format of the first data into a third format according to the first mapping relationship that has been updated, so as to obtain third data; and
update the stored first data according to the third data.

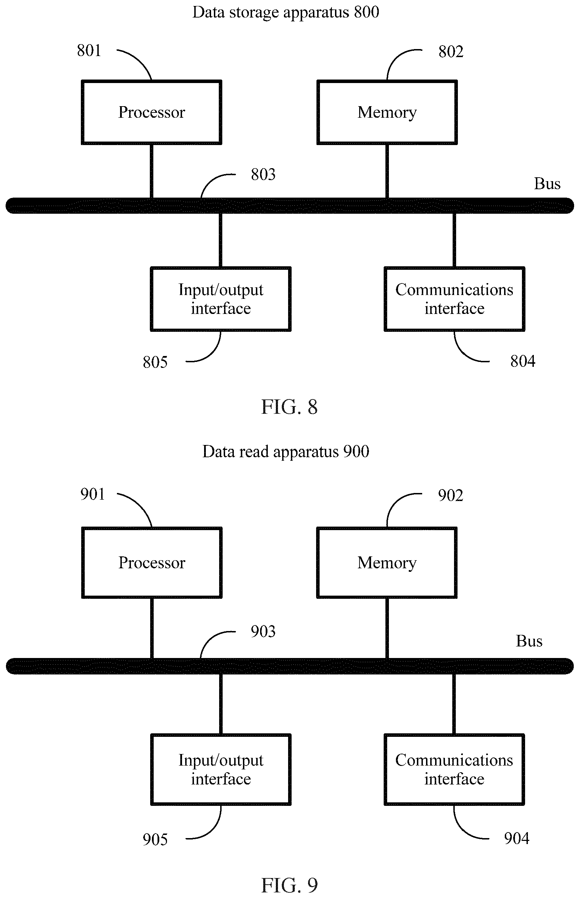

Referring to FIG. 8, based on a same inventive concept and the foregoing embodiments, an embodiment of the present invention further provides a data storage apparatus 800. The data storage apparatus 800 may include a memory 802 and a processor 801. Optionally, still referring to FIG. 8, in another embodiment of the present invention, the data storage apparatus 800 may further include an input/output interface (I/O interface) 805 and a communications interface 804.

The processor 801 may be specifically a CPU or an ASIC, or may be one or more integrated circuits used to control execution of programs, or may be a hardware circuit developed by using an FPGA, or may be a baseband chip. There may be one or more memories 802. The memory 802 may include a ROM, a RAM, and a magnetic disk memory. The input/output interface 805 includes dedicated registers and a corresponding control logic circuit, and is a medium and a bridge for exchanging information between the processor 801 (for example, a CPU) and an I/O device. The communications interface (Communication Interface) 804 may refer to an interface between a central processing unit and a standard communications subsystem, for example, an RS232 interface.

The memory 802, the input/output interface 805, and the communications interface 804 may be connected to the processor 801 by using a bus 803.

By designing and programming the processor 801, code corresponding to the foregoing method is solidified into a chip, so that the method shown in the foregoing embodiment may be executed when the chip runs. How to design and program the processor 801 is a technology known to a person skilled in the art, and details are not described herein.

In this embodiment of the present invention, the memory 802 is configured to store a computer-executable instruction. When the data storage apparatus 800 runs, the processor 801 reads the computer-executable instruction stored in the memory 802, so that the data storage apparatus 800 executes the data storage method described in the procedure of FIG. 1.

Referring to FIG. 9, based on a same inventive concept and the foregoing embodiments, an embodiment of the present invention further provides a data read apparatus 900. The data read apparatus 900 may include a memory 902 and a processor 901. Optionally, still referring to FIG. 9, in another embodiment of the present invention, the data read apparatus 900 may further include an input/output interface 905 and a communications interface 904.

The processor 901 may be specifically a CPU or an ASIC, or may be one or more integrated circuits used to control execution of programs, or may be a hardware circuit developed by using an FPGA, or may be a baseband chip. There may be one or more memories 902. The memory 902 may include a ROM, a RAM, and a magnetic disk memory. The input/output interface 905 includes dedicated registers and a corresponding control logic circuit, and is a medium and a bridge for exchanging information between the processor 901 (for example, a CPU) and an I/O device. The communications interface 904 may refer to an interface between a central processing unit and a standard communications subsystem, for example, an RS232 interface.

The memory 902, the input/output interface 905, and the communications interface 904 may be connected to the processor 901 by using a bus 903.

By designing and programming the processor 901, code corresponding to the foregoing method is solidified into a chip, so that the method shown in the foregoing embodiment may be executed when the chip runs. How to design and program the processor 901 is a technology known to a person skilled in the art, and details are not described herein.

In this embodiment of the present invention, the memory 902 is configured to store a computer-executable instruction. When the data read apparatus 900 runs, the processor 901 reads the computer-executable instruction stored in the memory 902, so that the data read apparatus 900 executes the data read method described in the procedure of FIG. 2.

The apparatuses in the embodiments of the present invention are all apparatuses corresponding to the foregoing methods. Therefore, for a working process of each module in the apparatuses, refer to the description of the methods.

The data storage apparatus and the data read apparatus in the foregoing embodiments may be a same device, or may be different devices. No limitation is imposed in the present invention.

In the embodiments of the present invention, a mapping relationship (that is, a first mapping relationship) between a format of data before stored and a KeyValue format is set, and during data storage, a device automatically performs storage according to the first mapping relationship, and a user does not need to get much involved. In addition, an application layer does not need to complete setting of a mapping relationship, storage of a mapping relationship, or format conversion. This brings a relatively friendly use environment to the user, and improves user experience. After the mapping relationship is set, data conversion and storage may be directly performed according to the mapping relationship, without a need of specifying a data storage manner each time. This reduces complexity of a data processing process, and facilitates application promotion.

It may be clearly understood by a person skilled in the art that, for the purpose of convenient and brief description, division of the foregoing function units is taken as an example for illustration. In actual application, the foregoing functions can be allocated to different function units and implemented according to a requirement, that is, an inner structure of an apparatus is divided into different function units to implement all or part of the functions described above. For a detailed working process of the foregoing system, apparatus, and unit, reference may be made to a corresponding process in the foregoing method embodiments, and details are not described herein.

In the several embodiments provided in the present application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the embodiments of the present application. The foregoing storage medium includes: any medium that can store program code, such as a USB flash drive, a removable hard disk, a ROM, a RAM, a magnetic disk, or an optical disc.

The foregoing embodiments are merely used to describe the technical solutions of the present application. The foregoing embodiments are merely intended to help understand the method and core idea of the present invention, and shall not be construed as a limitation on the present invention. Any variation or replacement readily figured out by a person skilled in the art within the technical scope disclosed in the present invention shall fall within the protection scope of the present invention.

## Claims

1. A data storage method, comprising:
receiving to-be-written first data that is in a first format and that is delivered by an application layer;
obtaining a first mapping relationship between data in the first format and data in a second format, wherein the second format is a KeyValue KeyValue format, and the first mapping relationship is used to indicate a row attribute and a column attribute that are corresponding to each value obtained by converting the data in the first format;
converting the format of the first data into the second format according to the first mapping relationship, so as to obtain second data; and
storing the second data.

2. The method according to claim 1, after the storing the second data, further comprising:
restoring the second data to the first data in the first format according to the first mapping relationship that has not been updated;
updating the stored first mapping relationship by using a second mapping relationship, wherein the second mapping relationship is used to indicate a row attribute and a column attribute that are corresponding to each value obtained by converting the data in the first format, and the row attribute corresponding to each value in the first mapping relationship is different from the row attribute corresponding to each value in the second mapping relationship, and/or the column attribute corresponding to each value in the first mapping relationship is different from the column attribute corresponding to each value in the second mapping relationship;
converting the format of the first data into a third format according to the first mapping relationship that has been updated, so as to obtain third data; and
updating the stored second data according to the third data.

3. The method according to claim 1, after the storing the second data, further comprising:
reading the stored second data if an instruction that is delivered by the application layer to read the first data is received;
converting the format of the second data into the first format according to the first mapping relationship, so as to obtain fourth data; and
feeding back and outputting the fourth data to the application layer.

4. A data read method, comprising:
reading stored second data if an instruction that is delivered by an application layer to read first data is received;
converting a KeyValue KeyValue format of the second data into a first format according to a first mapping relationship, wherein the first mapping relationship is used to indicate a row attribute and a column attribute that are corresponding to each value that is in the KeyValue format and that is obtained by converting the first data in the first format; and
feeding back and outputting the data in the converted format to the application layer.

5. The method according to claim 4, before the reading stored second data, further comprising:
receiving the to-be-written first data that is in the first format and that is delivered by the application layer;
obtaining the first mapping relationship between data in the first format and data in a second format, wherein the second format is the KeyValue format;
converting the format of the first data into the second format according to the first mapping relationship, so as to obtain the second data; and
storing the second data.

6. The method according to claim 4, after the storing the second data, further comprising:
restoring the second data to the first data in the first format according to the first mapping relationship that has not been updated;
updating the stored first mapping relationship by using a second mapping relationship, wherein the second mapping relationship is used to indicate a row attribute and a column attribute that are corresponding to each value obtained by converting the data in the first format, and the row attribute corresponding to each value in the first mapping relationship is different from the row attribute corresponding to each value in the second mapping relationship, and/or the column attribute corresponding to each value in the first mapping relationship is different from the column attribute corresponding to each value in the second mapping relationship;
converting the format of the first data into a third format according to the first mapping relationship that has been updated, so as to obtain third data; and
updating the stored second data according to the third data.

7. A data storage apparatus, comprising:
a receiving module, configured to receive to-be-written first data that is in a first format and that is delivered by an application layer;
an obtaining module, configured to obtain a first mapping relationship between data in the first format and data in a second format, wherein the second format is a KeyValue KeyValue format, and the first mapping relationship is used to indicate a row attribute and a column attribute that are corresponding to each value obtained by converting the data in the first format;
a conversion module, configured to convert the format of the first data into the second format according to the first mapping relationship, so as to obtain second data; and
an operation module, configured to store the second data.

8. The apparatus according to claim 7, wherein the apparatus further comprises a restoration module, a first updating module, and a second updating module, wherein:
the restoration module is configured to: after the operation module stores the second data, restore the second data to the first data in the first format according to the first mapping relationship that has not been updated;
the first updating module is configured to update the stored first mapping relationship by using a second mapping relationship, wherein the second mapping relationship is used to indicate a row attribute and a column attribute that are corresponding to each value obtained by converting the data in the first format, and the row attribute corresponding to each value in the first mapping relationship is different from the row attribute corresponding to each value in the second mapping relationship, and/or the column attribute corresponding to each value in the first mapping relationship is different from the column attribute corresponding to each value in the second mapping relationship, wherein
the conversion module is further configured to convert the format of the first data into a third format according to the first mapping relationship that has been updated, so as to obtain third data; and
the second updating module is configured to update the stored second data according to the third data.

9. The apparatus according to claim 7, wherein the apparatus further comprises a read module and an output module, wherein:
the read module is configured to: after the operation module stores the second data, read the stored second data if an instruction that is delivered by the application layer to read the first data is received, wherein
the conversion module is further configured to convert the format of the second data into the first format according to the first mapping relationship, so as to obtain fourth data; and
the output module is configured to feed back and output the fourth data to the application layer.

10. A data read apparatus, comprising:
a read module, configured to read stored second data if an instruction that is delivered by an application layer to read first data is received;
a conversion module, configured to convert a KeyValue KeyValue format of the second data into a first format according to a first mapping relationship, wherein the first mapping relationship is used to indicate a row attribute and a column attribute that are corresponding to each value that is in the KeyValue format and that is obtained by converting the first data in the first format; and
an output module, configured to feed back and output the data in the converted format to the application layer.

11. The apparatus according to claim 10, wherein the apparatus further comprises a receiving module, an obtaining module, and an operation module, wherein:
the receiving module is configured to: before the read module reads the stored second data, receive the to-be-written first data that is in the first format and that is delivered by the application layer;
the obtaining module is configured to obtain the first mapping relationship between data in the first format and data in a second format, wherein the second format is the KeyValue format, wherein
the conversion module is further configured to convert the format of the first data into the second format according to the first mapping relationship, so as to obtain the second data; and
the operation module is configured to store the second data.

12. The apparatus according to claim 10, wherein the apparatus further comprises a restoration module, a first updating module, and a second updating module, wherein:
the restoration module is configured to: after the operation module stores the second data, restore the second data to the first data in the first format according to the first mapping relationship that has not been updated;
the first updating module is configured to update the stored first mapping relationship by using a second mapping relationship, wherein the second mapping relationship is used to indicate a row attribute and a column attribute that are corresponding to each value obtained by converting the data in the first format, and the row attribute corresponding to each value in the first mapping relationship is different from the row attribute corresponding to each value in the second mapping relationship, and/or the column attribute corresponding to each value in the first mapping relationship is different from the column attribute corresponding to each value in the second mapping relationship, wherein
the conversion module is further configured to convert the format of the first data into a third format according to the first mapping relationship that has been updated, so as to obtain third data; and
the second updating module is configured to update the stored second data according to the third data.

13. A data storage apparatus, wherein the data storage apparatus comprises a processor and a memory, and the processor and the memory are connected by using a bus; and
the memory is configured to store a computer-executable instruction, and when the data storage apparatus runs, the processor reads the computer-executable instruction stored in the memory, so that the data storage apparatus executes the data storage method according to any one of claims 1 to 3.

14. A data read apparatus, wherein the data read apparatus comprises a processor and a memory, and the processor and the memory are connected by using a bus; and
the memory is configured to store a computer-executable instruction, and when the data read apparatus runs, the processor reads the computer-executable instruction stored in the memory, so that the data read apparatus executes the data read method according to any one of claims 4 to 6.
